# EUROPEAN PATENT APPLICATION

(11) **EP 4 361 574 A1**
(43) Date of publication of application: **01.05.2024**
(21) Application number: 23204312.5
(22) Date of filing: 18.10.2023
(51) Int. Cl.: G01F 1/08, G01F 1/12, G05D 7/06

(54) **APPARATUS FOR CONTROLLING THE FLOW RATE OF A FLUID**

(30) Priority: 28.10.2022 IT 202200022299
(71) Applicant: Polmac S.R.L., 41037 Mirandola (MO) (IT)
(72) Inventor: CHENDI, Luca, 41031 Camposanto (MO) (IT)
(74) Representative: Forattini, Amelia

(57) **Abstract**

An apparatus for controlling the flow rate of a fluid, comprising a containment body; an inlet branch and an outlet branch, for a fluid, formed in the containment body; measuring means arranged downstream of the inlet branch and configured to measure a flow of fluid passing from the inlet branch to the outlet branch; the inlet branch has interception means arranged upstream of the measuring means and configured to modify the passage area of the fluid; an electronic unit is configured to process a flow rate measurement, made by said measuring means, as the position of said interception means varies.

## Description

The present invention relates to an apparatus for controlling the flow rate of a fluid.

The apparatus according to the present invention is generally usable for precise and rapid measurement of the flow rate of a fluid in the agricultural, industrial and civil fields.

More particularly, the present invention relates to an apparatus advantageously usable in the field of agricultural spraying machines, for controlling and measuring the handling and distribution of chemicals.

At present, spraying and weed-killing machines require accurate metering of the crop protection products dispensed as a function of the characteristics of the area to be treated.

The machines comprise means for towing a spray boom equipped with dispensing nozzles supplied with a liquid to be dispensed in a controlled manner.

Such machines comprise flow rate measurement systems integrated in feedback control circuits that monitor the value of the actual flow rate, compare it with that of the required flow rate, and, where necessary, actuate hydraulic circuit components to correct the actual flow rate.

The machines may also include electronic management and control units associated with geolocation systems for finding the current position in the area to be treated.

The flow rate values are predefined according to specific prescription maps referring to the area to be treated, and are set in the electronic management and control unit.

These prescriptions can change abruptly during the execution of the treatment, also depending on the forward speed and the possible closing of one or more sections of the spray boom, or the opening and closing of individual jets.

It should be noted that the flow rate can vary in a matter of seconds from a maximum value, e.g. in the order of 200 l/min, to a minimum value, as a function of the current position of the agricultural machine.

The problem therefore arises of providing a flow rate measurement system that has a fast response time, so as not to penalise the effectiveness of the feedback control, while at the same time being reliable and accurate.

Several systems are known for measuring the actual flow rate of the dispensed liquid.

For example, it is known to make an indirect measurement using transducers that detect the actual pressure of the liquid in the circuit in order to derive the actual flow rate value by applying theoretical formulas containing specific parameters of the nozzles in use. Such system is relatively inexpensive and offers a fairly fast response time, but has poor accuracy, which is influenced by the efficiency status of the nozzles in use.

Another well-known system consists of the use of conventional flowmeters for agricultural machinery to perform a direct measurement of the flow rate delivered. Such system offers fair accuracy and a fairly fast response time, but is penalised by a limited reading range.

To overcome this drawback, it is known to divide the flow fed to the spray boom into several sections, each of which has its own flow meter. The total flow rate delivered is given by the sum of the values measured by the individual flow meters, which operate in parallel with each other. However, the large number of flow meters used increases the cost of implementation and complicates the architecture of the electronic circuits required to interface them with the electronic management and control unit.

In order to extend the range of measurements that can be obtained, it is possible to use industrial-type flow meters, which are characterised by high precision, but with much higher costs and excessively long response times.

Another well-known system consists of performing a mixed measurement using both flow meters for agricultural machinery and pressure transducers. This makes it possible to extend the range of measurements obtainable, but with higher implementation costs than using flow meters alone and with a degree of accuracy that is, in any case, limited by the fact that the method of measuring the actual flow rate is indirect.

For example, US2020/253110 discloses a system, for controlling and monitoring liquid applications of agricultural fields, having a flow device including an offset ball valve having multiple openings that rotate in position to control flow of a liquid through the offset ball valve to an outlet passage. A first passage provides a first flow path from an inlet to an opening of the offset ball valve and a second passage provides a second flow path from the inlet to an opening of the offset ball valve.

US3555901 discloses a fluid flow metering system comprising a dual metering line switchable in response to low or high flow rates.

WO2022053970A1 discloses a system having two connection lines arranged in parallel between an input line and an output line and a flow meter connected to each connection line and associated with a corresponding interval of flow rate values. Electronic means are functionally associated with the flow meters and with valve means in order to switch the operating position of the valve means as a function of the flow rate value in order to select the flowmeter with which a measurable flow rate value interval comprising the detected flow rate value is associated, opening the fluid communication between the corresponding connecting line and the input or output line.

EP0726510B1 discloses a flow meter, having a fluid-flow-operated impeller, a through-flow setting element controlling the fluid flow, and an electronic control and evaluation device; the through-flow setting element is variable between a closed position, in which it interrupts the fluid flow to the impeller, and an open position with maximum fluid flow, it is so disposed relative to the impeller that the fluid jet generated by the through-flow setting element, at least in the region of a slight degree of aperture of the through-flow setting element and therefore slight jet dimension, hits direct the wings of the impeller; the flow measuring device has a controllable electronic reducing gear; the reducing factor is set as a function of the degree of aperture of the through-flow setting element.

US8833384B2 discloses a valve and actuator assembly having a valve to control a flow of liquid into a coil, and an actuator to control the valve. The assembly includes a first temperature sensor to sense the temperature of liquid flowing through the valve, a second temperature sensor to sense the temperature of air surrounding the coil, and a flow meter to measure a flow rate of liquid through the valve. The actuator includes a module that receives data from the first and second temperature sensors and from the flow meter, and determines, based on data received from the flow meter and temperature sensors, a likelihood that the liquid in the coil will freeze. The actuator operates the valve to allow a minimum flow of the liquid through the valve and coil during a potential freeze condition. The minimum flow is sufficient to prevent the liquid in the coil from freezing.

A main drawback of the control systems described above is a considerably complicated structure that implies high production costs and reduced reliability.

The aim of the present invention is to provide a flow rate control apparatus which is improved with respect to the control systems of the prior art.

Within this aim, an object of the invention is to provide an apparatus that has low implementation costs.

A further object of the invention is to provide an apparatus that ensures a wide range of obtainable measurements.

A further object of the invention is to provide an apparatus that ensures a high and constant degree of reliability.

A further object of the invention is to provide an apparatus that can be applied to existing control systems.

An important object of the invention is to provide an apparatus that allows to extend the reading range in low volumes.

A further object of the invention is to provide an apparatus which allows the safety of the "always full tube" to be maintained, with the associated advantages of fast system response times.

A further object of the present invention is to provide an apparatus which is reliable and safe in use.

A further object of the present invention is to provide an apparatus that can be easily produced and is also competitive from an economic point of view.

This aim and objects, which will become better apparent below, are achieved by a fluid flow rate control apparatus as claimed in the appended claims.

Further characteristics and advantages will become better apparent from the description of preferred but not exclusive embodiments of the invention, illustrated by way of non-limiting example in the accompanying drawings, wherein:

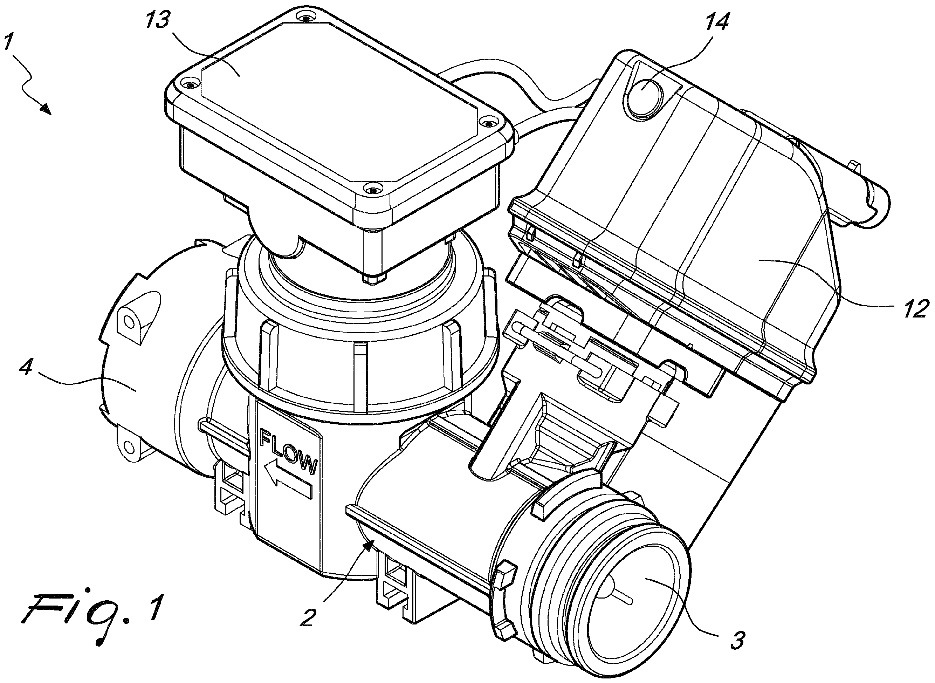

Figure 1 is a perspective view of the control apparatus according to the invention;

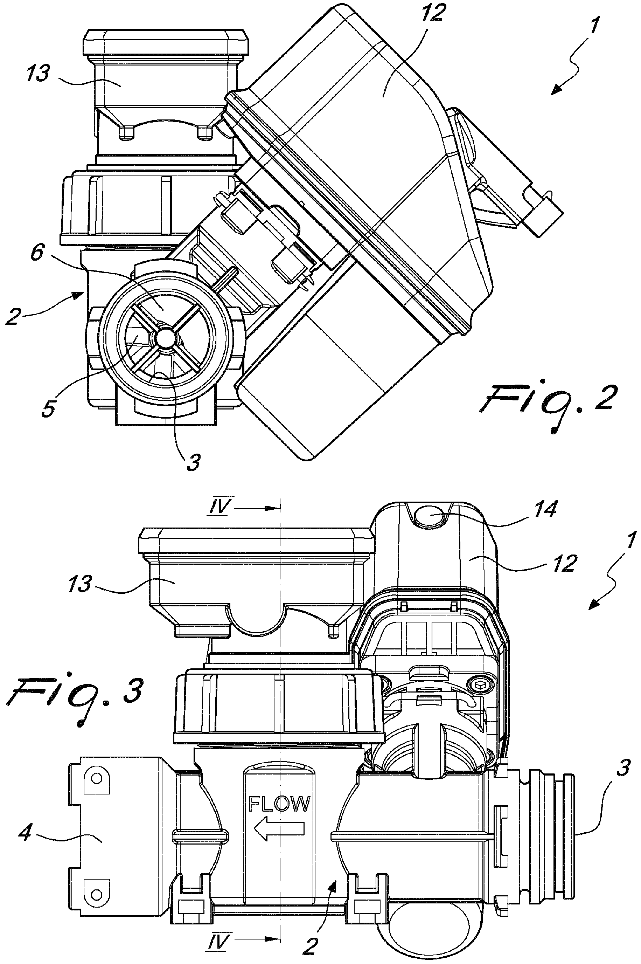

figure 2 is a side view of the apparatus;
figure 3 is a front view of the apparatus;

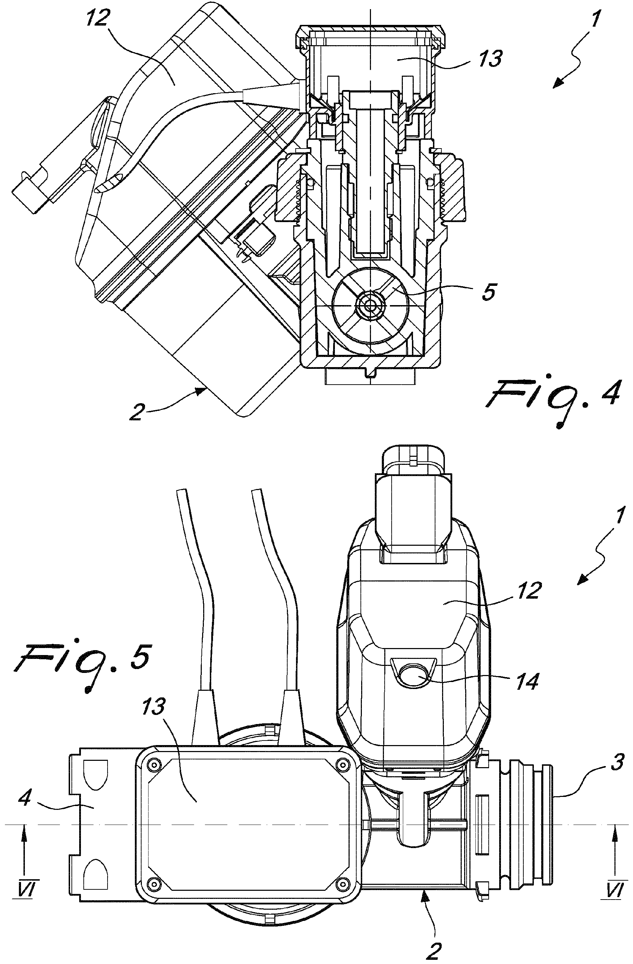

figure 4 is a cross-sectional side view taken along the line IV-IV of figure 3;
figure 5 is a plan view of the apparatus;

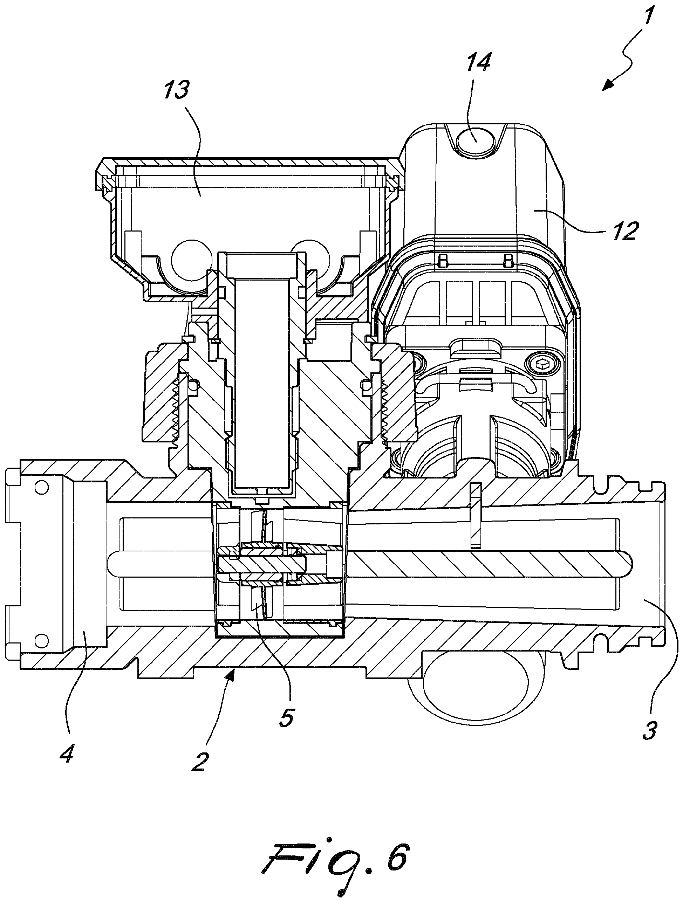

figure 6 is a cross-sectional view taken along the line VI-VI of figure 5;

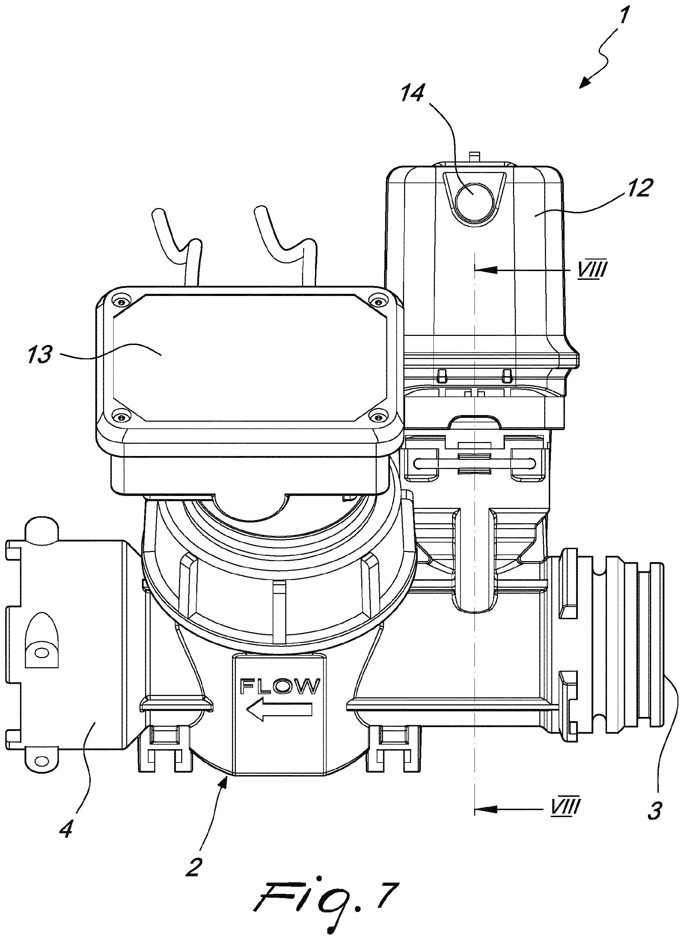

figure 7 is a frontal view of the apparatus from above;

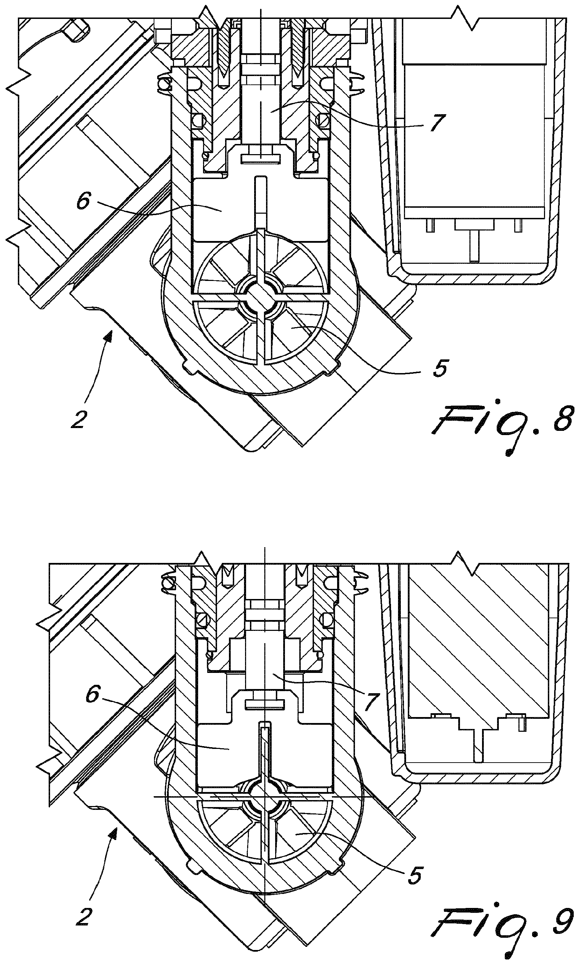

figure 8 is a cross-sectional side view taken along the line VIII-VIII of figure 7, showing the apparatus in the open guillotine condition;
figure 9 is a cross-sectional side view taken along the line VIII-VIII of figure 7, showing the apparatus in the closed guillotine condition;

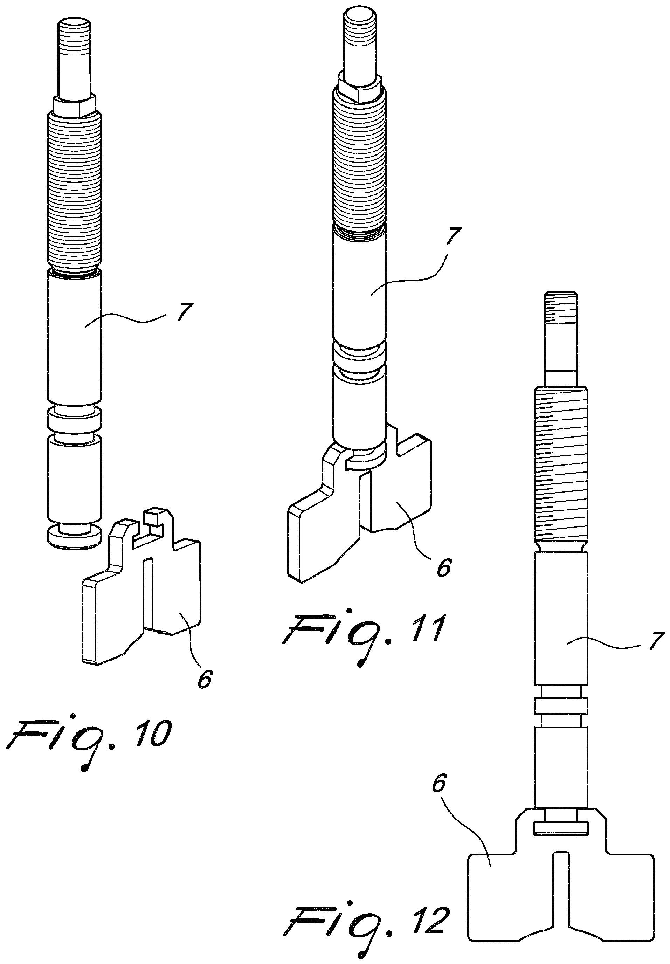

figure 10 is an exploded perspective view of the pin and guillotine assembly;
figure 11 is a perspective view of the pin and guillotine assembly;
figure 12 is a front elevation view of the pin and guillotine assembly.

With reference to the figures, the apparatus for controlling the flow rate of a fluid, according to the invention, generally designated by the reference numeral 1, comprises a containment body 2 in which an inlet branch 3 and an outlet branch 4 of a fluid are formed.

Measuring means 5 are arranged downstream of the inlet branch 3 and are configured to measure the flow of fluid passing from the inlet branch 3 to the outlet branch 4.

According to the invention, the inlet branch 3 comprises interception means 6, arranged upstream of the measuring means 5, and suitable to modify the fluid passage area.

The apparatus further comprises an electronic unit 13 configured to process a flow rate measurement, made by the measuring means 5, as the position of the interception means 6 varies.

The interception means comprise a guillotine 6, comprising a shaped plate which is associated with a control pin 7.

The control pin 7 of the guillotine 6 is driven by a gear motor 12, associated with the apparatus 1 and provided with an LED 14.

The apparatus, according to the present invention, provided with the guillotine and the electronic unit, makes it possible to process the flow rate measurement when the guillotine is lowered, in order to throttle the passage cross-section of the liquid, still on the basis of the number of revolutions of the impeller and applying a correct conversion factor.

In practice it has been found that the invention achieves the intended aim and objects, providing an apparatus that solves the problem of providing a rapid and accurate measurement of the flow by means of a mobile bulkhead, arranged on the inlet branch of the flowmeter. The mobile bulkhead is normally in an open configuration and, when operated in a closed configuration, forms a bottleneck that determines a reduction in the passage, thus allowing the flow meter to read flow rates lower than those for which it is normally calibrated.

The system according to the invention provides a new method of measuring the flow rate detected by the flow meter when working with a closed bulkhead.

The apparatus according to the present invention advantageously provides a single flow meter on which, by automatically acting on the inlet (supply) area, it is possible to extend the reading range in low volumes.

By always acting on the same channel, the safety of the "always full pipe" is maintained, with the associated advantages of fast system response times.

Unlike a conventional flowmeter, which has a sensor which detects the number of revolutions of the impeller immersed in the measuring chamber passed through by the flow of liquid and is connected to an electronic unit which processes the data, i.e. the number of revolutions, in order to obtain a flow rate measurement according to a certain conversion factor, in the apparatus according to the present invention there is an additional electronic unit, on board the instrument, which makes it possible to process the flow rate measurement, when the guillotine is lowered in order to throttle the passage cross-section of the liquid, still on the basis of the number of revolutions of the impeller and applying a "corrected" conversion factor.

## Claims

1. An apparatus for controlling the flow rate of a fluid, comprising a containment body (2); an inlet branch (3) and an outlet branch (4), for a fluid, being formed in said containment body (2); said apparatus being **characterised in that** it comprises measuring means (5) arranged downstream of said inlet branch (3); said measuring means (5) being configured to measure a flow of fluid passing from said inlet branch (3) to said outlet branch (4); said inlet branch (3) comprising interception means (6), arranged upstream of said measuring means (5) and configured to modify the passage area of said fluid; said apparatus further comprising an electronic unit (13) configured to process a flow rate measurement, made by said measuring means (5), as the position of said interception means (6) varies.

2. The apparatus according to claim 1, **characterised in that** said interception means comprise a guillotine (6).

3. The apparatus according to claim 2, **characterised in that** said guillotine (6) comprises a shaped plate associated with a control pin (7).

4. The apparatus according to one or more of the preceding claims, **characterised in that** said control pin (7) of said guillotine (6) is driven by a gear motor (12) associated with said apparatus.

5. The apparatus according to one or more of the preceding claims, **characterised in that** said electronic unit (13) processes a flow rate measurement when said guillotine (6) is lowered, throttling a passage cross-section of said fluid, based on the number of revolutions of an impeller and applying a correct conversion factor.
